# EUROPÄISCHE PATENTSCHRIFT

(11) **EP 1 363 114 B1**
(45) Veröffentlichungstag und Bekanntmachung des Hinweises auf die Patenterteilung: **04.02.2009**
(21) Anmeldenummer: 03005769.9
(22) Anmeldetag: 14.03.2003
(51) Int. Cl.: G01K 15/00

(54) **Verfahren zum Testen der Funktion eines in oder an einem Antriebsaggregat vorgesehenen Temperatursensors**
Method for the functional testing of a temperature sensor provided in or at a driving member
Procédé pour le test fonctionnel d'un capteur de température dans un élément d'entrainment

(30) Priorität: 17.05.2002 DE 10221992
(43) Veröffentlichungstag der Anmeldung: 19.11.2003
(73) Patentinhaber: AUDI AG, 85045 Ingolstadt (DE)
(72) Erfinder: Hommes, Georg, 85049 Ingolstadt (DE); Müller, Hermann, 85113 Böhmfeld (DE)
(74) Vertreter: Thielmann, Frank

(56) Entgegenhaltungen:
- DE-A1- 19 855 971
- US-A- 4 788 398
- US-A- 5 848 381
- US-B1- 6 344 747

## Beschreibung

Die Erfindung betrifft ein Verfahren zum Testen der Funktion eines in oder an einem Antriebsaggregat, insbesondere einem Kraftfahrzeuggetriebe vorgesehenen Temperatursensors unter Verwendung einer Recheneinrichtung.

In Antriebsaggregaten für beliebige Maschinen oder Gegenstände ist in der Regel mindestens ein Temperatursensor vorgesehen, der an einer bestimmten Stelle angeordnet Informationen über am oder im Antriebsaggregat herrschende Temperaturen liefert. Beispielsweise ist hier ein Kraftfahrzeuggetriebe, z.B. ein Automatik-Getriebe zu nennen, bei dem in der Regel mindestens ein Getriebe-Temperatursensor vorgesehen ist, mit dessen Information vielfältige Getriebe- und Motorfunktionen gesteuert werden. Um bei einem Sensorausfall in diesem Beispielsfall unerwünschte Fahrzeugreaktionen zu verhindern muss dieser Sensor permanent hinsichtlich seiner Funktionstüchtigkeit überwacht werden. Dies erfolgt in der Regel durch eine Kurzschlussprüfung des Temperatursensors nach Plus und Masse, wodurch Sensorfehler erkannt werden, die zu Temperaturwerten außerhalb des spezifizierten Bereichs führen.

Diese Kurzschlussprüfung ist aber lediglich eine sehr einfache und grobe Funktionsprüfung, mit der komplexere Sensorfehlfunktionen jedoch nicht erfasst werden können. Beispielsweise ist es möglich, dass der Temperatursensor "hängt", das heißt, dass er quasi kontinuierlich eine gleichbleibende Temperaturinformation liefert, die zwar innerhalb des spezifizierten Bereichs liegt und durchaus plausibel für normale Betriebsbedingungen ist, die aber kontinuierlich unabhängig vom tatsächlichen Betriebs- und damit Erwärmungszustand des Antriebsaggregats gegeben wird.

Aus der US 4,788,398 ist eine Anordnung zum Erkennen des Ausfalls eines Temperatursensors für eine temperaturgesteuerte Heizvorrichtung eines Haushaltsgeräts bekannt. Diese weist einen Heizenergiezähler auf, durch den die eingebrachte Energie aufgezeichnet und mit der vom Temperatursensor ermittelten Temperatur in Beziehung gesetzt werden kann.

Die US 5,848,381 beschreibt ein Entscheidungssystem zum Aufdecken von Temperatursensorausfällen in Kraftfahrzeugen, bei dem die Temperaturskala in mehrere Abschnitte A - E unterteilt wird. Die vom Temperatursensor erfasste Temperatur wird anhand dieser Temperaturskala einer Plausibilitätskontrolle unterzogen.

Der Erfindung liegt damit das Problem zugrunde, ein Verfahren anzugeben, das eine sichere Fehlfunktionsermittlung eines Temperatursensors ermöglicht.

Zur Lösung dieses Problems ist bei einem Verfahren der eingangs genannten Art erfindungsgemäß vorgesehen, dass die Recheneinrichtung in einem Integrationsverfahren einen Rechenwert für die beim Betrieb des Antriebsaggregats eingetragene Verlustarbeit, die zu einer Erwärmung des Antriebsaggregats führt, unter Berücksichtigung der Kühlarbeit, die zum Kühlen des Antriebsaggregats aufgewendet wird, ermittelt, wobei zur Bestimmung der Funktionstüchtigkeit des Temperatursensors die Korrelation des vom zu testenden Temperatursensor gelieferten Temperaturwerts mit dem Rechenwert ermittelt wird.

Das erfindungsgemäße Verfahren schlägt vor, die Verlustleistung des Antriebsaggregats über die Zeit aufzuintegrieren und so einen Rechenwert oder eine Maßzahl für die erzeugte oder eingetragene Verlustarbeit zu ermitteln, wobei diese Verlustarbeit bekanntermaßen zur Erwärmung des Antriebsaggregats im Betrieb führt. Dem gegenüber wird die Kühlarbeit gehalten, die zum Kühlen des Antriebsaggregats während des Betriebs aufgewendet wird beziehungsweise mit der das Antriebsaggregat beaufschlagt wird, wobei der Rechenwert oder die Maßzahl quasi dem Integral "Getriebeverlustleistung - Kühlleistung" entspricht. Hierüber kann also abgeschätzt werden, wie stark die Aggregaterwärmung aufgrund des Betriebs sein müsste. Diesem Rechenwert oder dieser Maßzahl wird nun der vom zu testenden Temperatursensor gelieferte Temperaturwert gegenüber gestellt und geprüft, inwieweit dieser Temperaturwert mit dem Rechenwert oder der Maßzahl für die Aggregatserwärmung korreliert, das heißt inwieweit er hierzu passt. Ergibt sich hierbei beispielsweise, dass der gelieferte Temperaturwert eine relativ niedrige Temperatur anzeigt, während der Rechenwert oder die Maßzahl angeben, dass bereits eine wesentlich stärkere Erwärmung erfolgt sein muss, so liegt eine Fehlfunktion vor. Hierauf basieren kann über die Recheneinrichtung beispielsweise ein Warnsignal ausgegeben werden, z.B. in Form einer Warnlampe, oder eine Ersatztemperatur angenommen werden, z.B. ein unkritischer Konstantwert oder z.B. die Motortemperatur oder aber eine entsprechende Information in einem zentralen Steuergerät abgespeichert werden, die beispielsweise bei der nächsten Wartung des Kraftfahrzeugs ausgelesen wird.

Dadurch, dass aufgrund des durch Integration ermittelten Rechenwerts oder der Maßzahl für die tatsächliche Getriebeerwärmung eine die geschätzte Ist-Erwärmung unter Berücksichtigung der Betriebsbedingungen beschreibende Information vorliegt, kann auf einfache Weise durch Überprüfung der Korrelation dieses Rechenwerts oder dieser Maßzahl mit dem Temperaturwert der Funktionstest erfolgen. Würde beispielsweise der Sensor "hängen", das heißt, würde er kontinuierlich den selben Temperaturwert liefern, so kann dieser mit dem Rechenwert nicht korrelieren, da der Rechenwert zu einem bestimmten Zeitpunkt eine Erwärmung indiziert, die mit dem Temperaturwert nicht übereinstimmen kann.

Die Überprüfung des zu testenden Temperatursensors kann zuverlässig in Phasen mit eindeutigem Temperaturgradienten durchgeführt werden. Dazu wird ein Referenztemperatursensor herangezogen, der im selben Leistungspfad untergebracht ist, wie der zu prüfende Sensor.

Diese Phasen sind einmal eine Abkühlphase, dadurch gekennzeichnet, dass der Referenzsensor eindeutig eine Aggregateabkühlung anzeigt, also ist auch unter bestimmten Randbedingungen an dem zu prüfenden Sensor eine Abkühlung zu erwarten. Zum anderen zeigt ein ausreichender Temperaturanstieg des Referenzsensors eine Aggregateerwärmung an, die unter bestimmten Randbedingungen auch eine Erwärmung des zu prüfenden Sensors zur Folge haben muss.

Der Referenzsensor dient nicht nur zur sicheren Erfassung von Temperaturgradienten, sondern allgemein zur Referenzierung und Absicherung des Testverfahrens, je nachdem wie die Testsequenz konzipiert ist worauf nachfolgend noch eingegangen wird.

Eine Fehlfunktion des Temperatursensors kann beispielsweise dann ermittelt werden, wenn in der Aufheizphase bei einem kalt gestarteten Antriebsaggregat bei Ermittlung eines Rechenwerts, der einen hinreichenden Eintrag an Verlustarbeit unter Berücksichtigung der Kühlarbeit anzeigt und damit eine Erwärmung erfolgt sein muss, und gegebenenfalls bei Vorliegen eines eine Erwärmung anzeigenden Referenztemperaturwerts, der vom zu testendem Temperatursensor gelieferte Temperaturwert nicht mit dem Rechenwert und gegebenenfalls dem Referenztemperaturwert korreliert. Hier erfolgt also der Funktionstest in der Aufheizphase ausgehend von einem kalten Antriebsaggregat. Der Begriff "kalt gestartet" heißt aber nicht, dass das Antriebsaggregat auf Umgebungstemperatur abgekühlt sein muss. Hierunter ist auch ein Ausgangszustand zu verstehen, bei dem das Antriebsaggregat beispielsweise eines Kraftfahrzeugs nach längerer Fahrt für ein oder zwei Stunden stand und gegenüber der Abstelltemperatur deutlich abgekühlt ist, jedoch noch nicht auf die Umgebungstemperatur herunter gekühlt ist. Denn in jedem Fall erfolgt beim erneuten Betrieb des Antriebsaggregats ein erneutes Aufheizen, wobei die erfindungsgemäße Funktionsprüfung dann in dieser Aufheizphase erfolgen kann.

Zweckmäßigerweise wird hierbei nach dem Start des Antriebsaggregats ein vom zu testenden Temperatursensor gelieferte Anfangs-Temperatur gespeichert und in vorbestimmten Zeitintervallen mit dem aktuell gelieferten Ist-Temperaturwert verglichen, wobei die Korrelationsprüfung mit dem Rechenwert und gegebenenfalls dem Referenztemperaturwert dann erfolgt, wenn der Vergleich des Anfangs-Temperaturwerts mit dem Ist-Temperaturwerts keine oder eine nicht plausible Erwärmung indiziert. Es wird hier also kontinuierlich in vorbestimmten Zeitintervallen die Differenz Anfangs-Ist-Temperatur aufgenommen, wobei die eigentliche Korrelationsprüfung nur dann erfolgt, wenn diese Temperaturdifferenz entweder gleich Null ist, sich also der Temperaturwert trotz Aggregatsbetriebs nicht ändert, oder aber sich nur insoweit ändert, dass die Änderung keinesfalls plausibel im Hinblick auf den Betrieb des Antriebsaggregats sein kann.

Alternativ oder zusätzlich zur Erfassung der relevanten Werte während der Aufheizphase kann im Rahmen der Fehlfunktionsprüfung auch die dem erneuten Betrieb vorausgegangene Abkühlphase zugrunde gelegt werden. Erfindungsgemäß ist hierzu vorgesehen, dass zur Ermittlung einer Fehlfunktion des Temperatursensors in oder nach einer Abkühlphase mit dem Abschalten des Antriebsaggregats nach einer Aufheizphase ein vom zu testenden Temperatursensor gelieferter Temperaturwert, ein vom zweiten Temperatursensor gelieferter Referenztemperaturwert und der Rechenwert gespeichert werden, wobei eine Fehlfunktion dann vorliegt, wenn nach dem erneuten Start des Antriebsaggregats der gespeicherte Rechenwert eine hinreichende frühere Erwärmung indiziert, eine hinreichende Differenz zwischen dem gespeicherten Referenztemperaturwert und dem mit dem Start erfassten Referenztemperatur vorliegt, und der gespeicherte Temperaturwert des zu testenden Temperatursensors und der mit dem Start erfasste Temperaturwert keine oder keine hinreichende plausible Differenz aufweisen.

Diese Erfindungsausgestaltung sieht also zunächst die Abspeicherung der relevanten Werte, nämlich des Temperaturwerts des Temperatursensors, des Referenztemperaturwerts und des Rechenwerts zu dem Zeitpunkt vor, zu dem das Antriebsaggregat nach dem Betrieb und nach dem Aufheizen abgeschalten wird. Hiernach kühlt das Antriebsaggregat beliebig lange ab. Nach dem erneuten Einschalten werden dann erneut der Temperaturwert des Temperatursensors sowie der Referenztemperaturwert aufgenommen und anschließend ausgewertet. Ausgangspunkt ist hierbei, dass der gespeicherte Rechenwert prinzipiell eine hinreichende frühere Erwärmung indiziert, das heißt, dass definiert ist, dass das Antriebsaggregat vor dem Abschalten hinreichend heiß war. Anschließend erfolgt die Differenzbildung zwischen dem gespeicherten Referenztemperaturwert und dem unmittelbar erfassten Referenztemperaturwert, woraus sich die temperaturmäßige Abkühlung ermitteln lässt. Ergibt nun die Differenzbildung des gespeicherten Temperaturwerts und des unmittelbar erfassten Temperaturwerts des zu testenden Temperatursensors keine oder keine hinreichend plausible Differenz, so liegt auch hier keine Korrelation zu der ursprünglich eingetragenen Verlustarbeit vor, da der Temperatursensor dann de facto anzeigt, dass sich die Temperatur am Messort nicht geändert hat. Die Erfassung des Referenztemperaturwerts dient hier dazu, um als Referenz zu erfassen, ob überhaupt eine Temperaturabsenkung erfolgt ist.

Die Speicherung des Temperaturwerts und des Referenztemperaturwerts und gegebenenfalls des Rechenwerts erfolgt zweckmäßigerweise nach dem Abschalten des Antriebsaggregats in einer Nachlaufphase der Recheneinrichtung, so dass die Möglichkeit besteht, nach dem Ausschalten der Zündung noch weitere Werte aufnehmen zu können.

Wie beschrieben kann es sich bei dem ersten Temperatursensor um einen Getriebesensor und beim zweiten Temperatursensor um einen Motorsensor eines Antriebsaggregats handeln, zweckmäßigerweise wie gesagt um ein Antriebsaggregat eines Kraftfahrzeugs, sei es eines PKW's oder eines LKW's oder eines Motorrads etc. Der Funktionstest selbst kann mehrmals pro Sekunde, insbesondere alle 80 ms erfolgen, das heißt im Hinblick auf die üblichen Arbeitsgeschwindigkeiten moderner Recheneinrichtungen beziehungsweise Prozessoren, z.B. von hier verwendbaren EEPROM's in einer relativ langsamen Zeitscheibe.

Das Verfahren kann angewendet werden in einem Kraftfahrzeug mit einem Antriebsaggregat mit einem oder mehreren wie oben angegebenen angeordneten Temperatursensoren sowie einer zugeordneten Recheneinrichtung, wobei dieses Kraftfahrzeug zur Durchführung des beschriebenen Verfahrens ausgebildet ist.

Weitere Vorteile, Merkmale und Einzelheiten der Erfindung ergeben sich aus den im Folgenden beschriebenen Ausführungsbeispielen sowie anhand der Zeichnung. Dabei zeigen:
- Fig. 1: einen Ausschnitt aus einem erfindungsgemäßen Kraftfahrzeug mit einer Darstellung des Antriebsaggregats sowie der zugeordneten Recheneinrichtung,
- Fig. 2: eine Prinzipskizze zur Darstellung zur Ermittlung des Rechenwerts für die Getriebeerwärmung,
- Fig. 3: ein Ablaufdiagramm zur Darstellung der Funktionsprüfung eines Getriebe-Temperatursensors in der Aufheizphase, und
- Fig. 4: ein Ablaufdiagramm zur Darstellung der Prüfung eines Getriebe- Temperatursensors in oder nach der Abkühlphase.

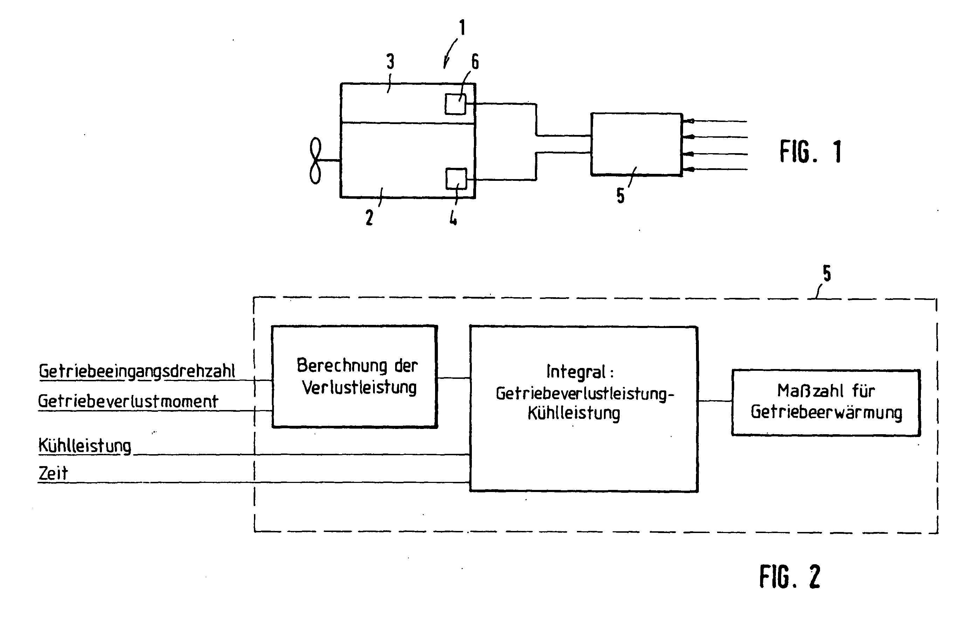

Fig. 1 zeigt als Teilausschnitt aus einem erfindungsgemäßen Kraftfahrzeug dessen Antriebsaggregat 1 bestehend aus einem Getriebe 2 und einem Motor 3. Im Getriebe 2 ist ein Temperatursensor 4 vorgesehen, der die Temperatur des Getriebeöls misst. In Abhängigkeit der von ihm gelieferten Information werden über eine Recheneinrichtung 5, der diese Informationen gegeben werden, vielfältige Getriebe- und Motorfunktionen gesteuert. Bei Recheneinrichtung 5 handelt es sich im gezeigten Beispiel um ein Getriebeund Motorsteuergerät, über das die genannten Funktionen gesteuert werden können, worauf hier jedoch nicht näher eingegangen werden braucht, da es in der nachfolgenden Beschreibung lediglich um den Funktionstest des Getriebetemperatursensors 4 geht.

Dem Motor 3 ist ein zweiter Temperatursensor 6 zugeordnet, der ebenfalls mit der Recheneinrichtung 5 kommuniziert und seine Temperaturinformationen an die Recheinrichtung 5 liefert. Sowohl das Getriebe 2 als auch der Motor 3 werden während des Betriebs mit der annähernd gleichen Leistung beaufschlagt. Dabei entsteht in den Teilaggregaten entsprechend deren Wirkungsgrad Verlustarbeit, die das jeweilige Aggregat entsprechend erwärmt trotz gleichzeitiger Kühlung. Das bedeutet, dass die Temperatursensoren 4 und 6 annähernd korrelierende Temperaturen messen.

Die Recheneinrichtung 5 ist nun zur Durchführung eines Funktionstests des Temperatursensors 4 ausgebildet, worauf nachfolgend noch eingegangen wird. Zu diesem Zweck werden der Recheneinrichtung 5, wie durch die vier Pfeile in Fig. 1 angedeutet, eine Reihe von Informationen gegeben, anhand welcher es der Recheneinrichtung 5 möglich ist, eine Maßzahl oder einen Rechenwert für die betriebsbedingte Getriebeerwärmung auf Basis der eingetragenen Getriebeverlustleistung und der Kühlleistung zu ermitteln.

Das Grundschema der Ermittlung dieser Maßzahl ist in Fig. 2 gezeigt. Gezeigt ist, wie durch den gestrichelten Kasten angegeben, die Recheneinrichtung 5 und die in ihr ablaufenden grundlegenden Rechenschritte.

Der Recheneinrichtung 5 wird zunächst kontinuierlich eine Information über die Getriebeeingangsdrehzahl gegeben, die über ein geeignetes Sensorelement erfasst wird.

Ferner wird der Recheneinrichtung 5 eine Information über das Getriebeverlustmoment gegeben oder gegebenenfalls rechnereinrichtungsseitig selbst ermittelt. Aus den beiden Parametern Getriebeeingangsdrehzahl und Getriebeverlustmoment wird nun in der Recheneinrichtung 5 die momentane Verlustleistung des Antriebsaggregats 1 berechnet.

Die berechnete Verlustleistung wird nun durch Integralbildung aufintegriert, wobei davon die ebenfalls aufintegrierte Kühlleistung, die zur Kühlung des Antriebsaggregats 1 erbracht wird, innerhalb der Integralbildung subtrahiert wird. Die Kühlleistung wird anhand geeigneter Parameter (z.B. Temperatur des Kühlmittels, Kühlmitteldurchsatz etc.) bestimmt, entweder extern oder in der Recheneinrichtung 5 selbst. Das Integral über die Zeit aus der Differenz Verlustleistung - Kühlleistung ergibt die effektive Verlustarbeit, die seitens des Antriebsaggregats 1 abfällt und zur Erwärmung des Antriebsaggregats 1 führt. Hieraus wird nun ein Rechenwert oder eine Maßzahl für die Getriebeerwärmung, wie sie sich also rein rechnerisch ergeben muss, ermittelt. Diese Maßzahl oder dieser Rechenwert ist nun Grundlage für einen durchzuführenden Funktionstest des Temperatursensors 4.

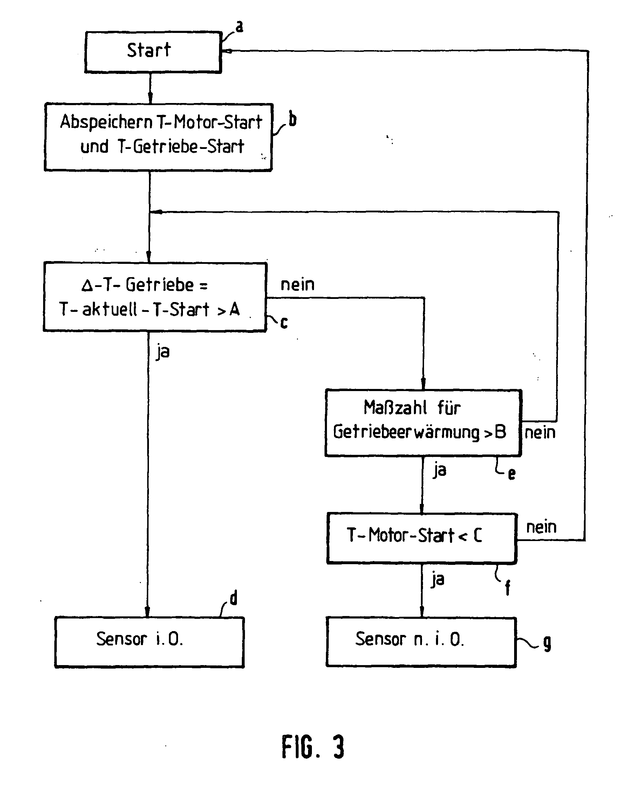

Fig. 3 zeigt ein Ablaufdiagramm zur Prüfung des Getriebe-Temperatursensors 4 in der Aufheizphase, wenn das Antriebsaggregat beispielsweise des Kraftfahrzeugs in abgekühltem Zustand gestartet wird.

Zunächst wird, siehe Schritt a, das Antriebsaggregat beziehungsweise der Motor gestartet. Mit dem Start werden, siehe Schritt b, die aktuellen Temperaturinformationen des motorseitigen Temperatursensors 6 (T-Motor-Start) und des getriebeseitigen Temperatursensors 4 (T-Getriebe-Start) abgespeichert. Anschließend wird in kontinuierlichen Zeitintervallen die Ist-Differenz zwischen dem kontinuierlich vom getriebeseitigen Temperatursensor 4 gelieferten Temperaturwert und dem abgespeicherten Start-Temperaturwert ermittelt, wie in Schritt c angegeben ist. Die beschriebene Temperaturdifferenz ergibt sich also aus ΔT-Getriebe = T-aktuell - T-Start. Gleichzeitig wird überprüft, ob diese Differenz größer ist als ein bestimmter Vergleichswert A. Ist dies der Fall, ergibt sich also eine hinreichender Temperaturwertunterschied, so ist der Sensor in Ordnung, wie mit Schritt d angegeben.

Ist dies nicht der Fall, das heißt ist die Differenz kleiner als der Vergleichswert A, so wird, siehe Schritt e, im nächsten Schritt überprüft, ob die kontinuierlich ermittelte und sich auch kontinuierlich aufgrund der zunehmenden Erwärmung ändernde Maßzahl für die Getriebeerwärmung größer als ein bestimmter Vergleichswert B ist. Ist dies nicht der Fall, liegt also keine oder nur eine minimale Erwärmung vor, kehrt die Schleife wieder zurückt und es erfolgt erneut die Ermittlung des Wertes ΔT-Getriebe.

Ist jedoch die Maßzahl für die Getriebeerwärmung größer als der Vergleichswert B, so liegt bereits eine beachtliche Erwärmung vor. Im Schritt f wird nun überprüft, ob der gespeicherte Start-Temperaturwert des Motor-Temperatursensors 6 kleiner als ein bestimmter Vergleichswert C ist. Hierüber wird ermittelt, ob überhaupt eine Abkühlung stattgefunden hat, so dass sich das Antriebsaggregat generell hat erwärmen können. Hierdurch wird der Fall ausgeschlossen, dass das Fahrzeug nach längerer Fahrt, wenn also das Antriebsaggregat seine maximale Betriebstemperatur erreicht hat, nur kurz abgestellt wird, ohne nennenswert abzukühlen, und anschließend die Fahrt fortgesetzt wird. Fand also eine hinreichende Abkühlung statt, so ergibt das Ergebnis, das ΔT-Getriebe nicht größer als der Vergleichswert A ist, dass der Temperatursensor 4 nicht in Ordnung ist, wie mit g angedeutet ist.

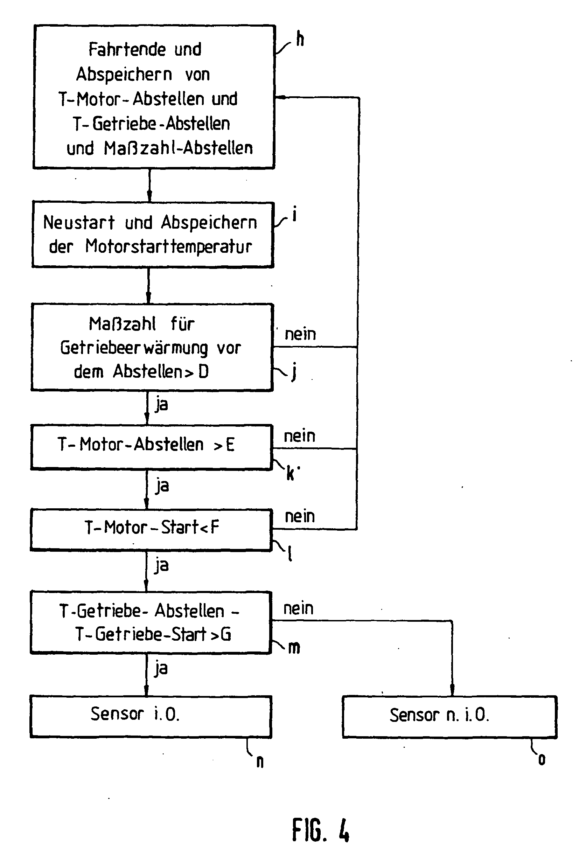

Fig. 4 zeigt ein Ablaufdiagramm für die Prüfung des Getriebe-Temperatursensors 4 in beziehungsweise nach der Abkühlphase. Zunächst wird, wie im Schritt h gezeigt ist, nach dem Fahrtende die aktuelle Betriebstemperatur des Motors über den motorseitigen Temperatursensor 6 erfasst und in der Recheneinrichtung 5 abgespeichert (T-Motor-Abstellen), entsprechend wird die vom Temperatursensor 4 erfasste Getriebe-Abstelltemperatur abgespeichert (T-Getriebe-Abstellen). Nach Ablauf einer bestimmten Zeit, z.B. nachdem das Auto über Nacht in der Garage gestanden hat, erfolgt ein Neustart und ein Abspeichern der aktuellen Motorstarttemperatur, wie im Schritt i angezeigt ist. Anschließend wird im Schritt j überprüft, ob die seitens der Recheneinrichtung 5 ermittelt Maßzahl für die Getriebeerwärmung vor dem Abstellen, die ebenfalls im Schritt h abgespeichert wurde (Maßzahl-Abstellen) größer als ein Vergleichswert D ist. Hierüber wird sichergestellt, dass ein hinreichendes Aufheizen vor dem Abstellen erfolgt ist.

Ist dies der Fall, wird im Schritt k überprüft, ob die Motorabstelltemperatur größer als ein Vergleichswert E war, also der Motor hinreichend heiß war. Ist dies der Fall, wird im Schritt I überprüft, ob die Motorstarttemperatur kleiner als ein Vergleichswert F ist, ob also eine hinreichende Abkühlung überhaupt erfolgt ist. Ist auch dies der Fall, so wird im Schritt m die Differenz zwischen der vom getriebeseitigen Temperatursensor 4 gelieferten Abstelltemperatur und der beim Start aufgenommenen Starttemperatur berechnet und überprüft, ob diese Differenz größer als ein Vergleichswert G ist. Ergibt sich, dass dies so ist, so hat der getriebeseitige Temperatursensor 4 korrekt die Abkühlung erfasst, er hat also sowohl in der heißen Betriebsphase als auch in der kalten Abkühlphase die richtigen Temperaturen erfasst. Der Sensor ist in Ordnung, wie bei Position n angegeben. Ergibt sich jedoch, dass die Differenz kleiner als der Vergleichswert G ist, beispielsweise wenn sie gleich Null ist, so hat der Temperatursensor die tatsächliche Abkühlung nicht erfasst, der Sensor ist nicht in Ordnung, wie durch die Position O gezeigt.

Die beiden beschriebenen Funktionsprüfungsschemata lassen ein sicheres Erfassen der Funktion des getriebeseitigen Temperatursensors 4 in der jeweiligen Phase zu. Selbstverständlich ist es möglich, in beiden Phasen die Funktionstests durchzuführen, den Temperatursensor also kumulativ und kontinuierlich gemäß dem beschriebenen Verfahren zu überprüfen. Abschließend ist zu bemerken, dass der motorseitige Temperatursensor jeweils die Referenztemperaturwerte liefert, wie sie eingangs beschrieben wurden.

## Patentansprüche

1. Verfahren zum Testen der Funktion eines in oder an einem Antriebsaggregat, insbesondere einem Kraftfahrzeuggetriebe vorgesehenen Temperatursensors unter Verwendung einer Recheneinrichtung,
**dadurch gekennzeichnet,**
**dass** die Recheneinrichtung einen Rechenwert für die beim Betrieb des Antriebsaggregats eingetragene Verlustarbeit, die zu einer Erwärmung des Antriebsaggregats führt, unter Berücksichtigung der Kühlarbeit, die zum Kühlen des Antriebsaggregats aufgewendet wird, ermittelt, wobei zur Bestimmung der Funktionstüchtigkeit des Temperatursensors die Korrelation des vom zu testenden Temperatursensor gelieferten Temperaturwerts mit dem Rechenwert ermittelt wird.

2. Verfahren nach Anspruch 1,
**dadurch gekennzeichnet,**
**dass** zusätzlich ein Referenztemperaturwert eines zweiten Temperatursensors, der an einem Antriebsaggregat angeordnet ist welches im Wesentlichen den gleichen Leistungsdurchsatz aufweist, erfasst wird, der im Rahmen der Korrelationsprüfung berücksichtigt wird.

3. Verfahren nach Anspruch 1 oder 2,
**dadurch gekennzeichnet,**
**dass** eine Fehlfunktion des Temperatursensors ermittelt wird, wenn in der Aufheizphase bei einem kalt gestarteten Antriebsaggregat bei Ermittlung eines Rechenwerts, der einen hinreichenden Eintrag an Verlustarbeit unter Berücksichtigung der Kühlarbeit anzeigt und damit eine Erwärmung erfolgt sein muss, und gegebenenfalls bei Vorliegen eines eine Erwärmung anzeigenden Referenztemperaturwerts, der vom zu testenden Temperatursensor gelieferte Temperaturwert nicht mit dem Rechenwert und gegebenenfalls dem Referenztemperaturwert korreliert.

4. Verfahren nach Anspruch 3,
**dadurch gekennzeichnet,**
**dass** nach dem Start des Antriebsaggregats ein vom zu testenden. Temperatursensor gelieferter Anfangs-Temperaturwert gespeichert und in vorbestimmten Zeitintervallen mit dem aktuell gelieferten Ist-Temperaturwert verglichen wird, und dass die Korrelationsprüfung mit dem Rechenwert und gegebenenfalls dem Referenztemperaturwert dann erfolgt, wenn der Vergleich keine oder eine nicht plausible Erwärmung indiziert.

5. Verfahren nach einem der vorangehenden Ansprüche,
**dadurch gekennzeichnet,**
**dass** zur Ermittlung einer Fehlfunktion des Temperatursensors in oder nach einer Abkühlphase mit dem Abschalten des Antriebsaggregats nach einer Aufheizphase ein vom zu testenden Temperatursensor gelieferter Temperaturwert, ein vom zweiten Temperatursensor gelieferter Referenztemperaturwert und der Rechenwert gespeichert werden, wobei eine Fehlfunktion dann vorliegt, wenn nach dem erneuten Start des Antriebsaggregats der gespeicherte Rechenwert eine hinreichende frühere Erwärmung indiziert, eine hinreichende Differenz zwischen dem gespeicherten Referenztemperaturwert und dem mit dem Start erfassten Referenztemperaturwert vorliegt, und der gespeicherte Temperaturwert des zu testenden Temperatursensors und der mit dem Start erfasste Temperaturwert keine oder keine hinreichend plausible Differenz aufweisen.

6. Verfahren nach Anspruch 5,
**dadurch gekennzeichnet,**
**dass** die Speicherung des Temperaturwerts und des Referenztemperaturwerts und gegebenenfalls des Rechenwerts nach dem Abschalten des Antriebsaggregats in einer Nachlaufphase der Recheneinrichtung erfolgt.

7. Verfahren nach einem der vorangehenden Ansprüche
**dadurch gekennzeichnet,**
**dass** der erste Temperatursensor ein Getriebesensor und der zweite Temperatursensor ein Motorsensor ist.

8. Verfahren nach einem der vorangehenden Ansprüche,
**dadurch gekennzeichnet,**
**dass** der Funktionstest mehrmals pro Sekunde, insbesondere alle 80 ms erfolgt.

## Claims

1. Method of testing the function of a temperature sensor provided in or on a drive unit, in particular a motor vehicle gearbox, using a computing device, **characterised in that** the computing device calculates a value for the energy loss during the operation of the drive unit leading to heating of the drive unit, taking the cooling energy expended to cool the drive unit into account, the correlation of the temperature value supplied by the temperature sensor to be tested with the calculated value being established in order to determine the functional reliability of the temperature sensor.

2. Method according to claim 1, **characterised in that** a reference temperature value from a second temperature sensor arranged on a drive unit having essentially the same power throughput is additionally detected and is taken into account in the correlation test.

3. Method according to claim 1 or claim 2, **characterised in that** malfunction of the temperature sensor is established if, during the heating phase in the case of a cold-started drive unit, given a calculated value indicating sufficient energy loss taking the cooling energy into account and therefore necessitating heating, and possibly in the presence of a reference temperature value indicating heating, the temperature value supplied by the temperature sensor to be tested does not correlate with the calculated value and possibly the reference temperature value.

4. Method according to claim 3, **characterised in that**, once the drive unit has been started, an initial temperature value supplied by the temperature sensor to be tested is stored and is compared at predetermined time intervals with the currently supplied actual temperature value, and that the correlation test with the calculated value and possibly the reference temperature value is then effected if the comparison indicates no heating or implausible heating.

5. Method according to one of the preceding claims, **characterised in that**, in order to establish malfunction of the temperature sensor during or after a cooling phase when the drive unit has been switched off after a heating phase, a temperature value supplied by the temperature sensor to be tested, a reference temperature value supplied by the second temperature sensor and the calculated value are stored, malfunction then being present if, once the drive unit has been started again, the stored calculated value indicates sufficient previous heating, there is a sufficient difference between the stored reference temperature value and the reference temperature value detected upon starting, and there is no difference or no sufficiently plausible difference between the stored temperature value of the temperature sensor to be tested and the temperature value detected upon starting.

6. Method according to claim 5, **characterised in that** the temperature value and the reference temperature value and possibly the calculated value are stored once the drive unit has been switched off in an after-running phase of the computing device.

7. Method according to one of the preceding claims, **characterised in that** the first temperature sensor is a gearbox sensor and the second temperature sensor is an engine sensor.

8. Method according to one of the preceding claims, **characterised in that** the function test is carried out several times per second, in particular every 80 ms.

## Revendications

1. Procédé destiné à tester la fonction d'un capteur de température prévu dans ou sur un mécanisme d'entraînement, en particulier sur une boîte de vitesses d'un véhicule automobile, en utilisant un dispositif de calcul,
**caractérisé en ce**
**que** le dispositif de calcul détermine une valeur de calcul pour la perte d'énergie par frottement enregistrée lors du fonctionnement du mécanisme d'entraînement, conduisant à une élévation de la température du mécanisme d'entraînement, en tenant compte du système de refroidissement, utilisé pour refroidir le mécanisme d'entraînement, la corrélation de la valeur de température fournie par le capteur de température test étant calculée à l'aide de la valeur de calcul afin de déterminer l'efficacité de la fonction du capteur de température.

2. Procédé selon la revendication 1,
**caractérisé en ce**
**qu'**on relève en outre une valeur de température de référence d'un second capteur de température, lequel capteur est disposé sur un mécanisme d'entraînement, qui présente essentiellement la même capacité de puissance, dont on tient compte dans le cadre du test de corrélation.

3. Procédé selon la revendication 1 ou 2,
**caractérisé en ce**
**qu'**une fonction défectueuse du capteur de température est déterminée, lorsque la valeur de température fournie par le capteur de température à tester ne correspond pas à la valeur de calcul, et le cas échéant, à la valeur de température de référence, dans la phase de réchauffement dans le cas d'un mécanisme d'entraînement démarré à froid pour la détermination d'une valeur de calcul, qui montre un apport suffisant en perte d'énergie par frottement en tenant compte du système de refroidissement, s'en suivant obligatoirement un réchauffement, et, le cas échéant, en cas de présence d'une valeur de température de référence montrant un réchauffement.

4. Procédé selon la revendication 3,
**caractérisé en ce**
**qu'**après l'actionnement du mécanisme d'entraînement, une valeur de température du début fournie par le capteur de température à tester est enregistrée et est comparée, à intervalles de temps prédéterminés, à la dernière valeur de température réelle fournie, et en ce qu'ensuite a lieu le test de corrélation avec la valeur de calcul et, le cas échéant, avec la valeur de température de référence, quand la comparaison n'indique aucun réchauffement ou aucun réchauffement plausible.

5. Procédé selon l'une quelconque des revendications précédentes,
**caractérisé en ce**
**que** pour déterminer une fonction défectueuse du capteur de température pendant ou après une phase de refroidissement en coupant le mécanisme d'entraînement après une phase de réchauffement, une valeur de température fournie par le capteur de température à tester, une valeur de température de référence fournie par le second capteur de température et la valeur de calcul sont enregistrées, une fonction défectueuse étant alors constatée, si après le redémarrage du mécanisme d'entraînement, la valeur de calcul enregistrée indique un réchauffement précédent suffisant, si une différence suffisante entre la valeur de température de référence enregistrée et une valeur de température de référence relevée lors de l'actionnement est constatée et si la valeur de température enregistrée du capteur de température à tester et la valeur de température relevée au démarrage ne présentent aucune différence ou aucune différence suffisante plausible.

6. Procédé selon la revendication 5,
**caractérisé en ce**
**que** l'enregistrement de la valeur de température et de la valeur de température de référence et, le cas échéant, de la valeur du calcul a lieu après avoir coupé le mécanisme d'entraînement pendant une phase de marche à vide du dispositif de calcul.

7. Procédé selon l'une quelconque des revendications précédentes,
**caractérisé en ce**
**que** le premier capteur de température est un capteur de boîte de vitesses, et en ce que le second capteur de température est un capteur de moteur.

8. Procédé selon l'une quelconque des revendications précédentes,
**caractérisé en ce**
**que** le test de fonctionnement est effectué plusieurs fois par seconde, en particulier toutes les 80 ms.
